# EUROPÄISCHE PATENTANMELDUNG

(11) **EP 4 606 912 A1**
(43) Veröffentlichungstag der Anmeldung: **27.08.2025**
(21) Anmeldenummer: 24158591.8
(22) Anmeldetag: 20.02.2024
(51) Int. Cl.: C21D 1/28, C21D 1/30, C21D 7/10, C21D 7/13, C21D 8/10, C21D 9/08, C22C 38/04, C22C 38/60, F16L 15/00, F16L 19/00, F16L 21/00, F16L 25/00, F16L 33/00, F16L 47/00

(54) **SCHLAUCHARMATUR UND VERFAHREN ZUR HERSTELLUNG EINER SCHLAUCHARMATUR**

(71) Anmelder: Benteler Steel/Tube GmbH, 33104 Paderborn (DE)
(72) Erfinder: Mehren, Bernd, 47249 Duisburg (DE); Sasse, Daniel, 46569 Hünxe (DE); Runschke, Anton, 33604 Bielefeld (DE); Brabander, Helwig, 33154 Salzkotten (DE)
(74) Vertreter: Griepenstroh, Jörg

(57) **Zusammenfassung**

Die Erfindung betrifft eine Schlaucharmatur 1 mit einem Schlauchstutzen 2 und einer Pressfassung 3 zur Verbindung mit dem Schlauchstutzen 2, wobei die Pressfassung 3 innenseitig und der Schlauchstutzen 2 außenseitig jeweils einen gezahnten Verbindungsbereich zur Schlauchfixierung haben und wobei die Pressfassung 3 eine ringförmige Kontaktzone aufweist, die dazu ausgebildet ist, mit einer Kontaktzone des Schlauchstutzens 2 durch plastische Verformung kontaktiert zu werden, wobei der Schlauchstutzen 2 und/ oder die Pressfassung 3 aus einer Stahllegierung bestehen, die neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
wobei das Mikrogefüge Korngröße 8 gemäß ASTM E112-13(2021) oder feiner ist und die Bruchdehnung A5 min. 15% beträgt, wobei die Pressfassung 3 außenseitig und der Schlauchstutzen 2 jeweils in zumindest einem Längenabschnitt ziehglatt sind mit einer Rauigkeit Ra 0,1 µm bis 4 µm sowie innenseitig bis zu einer Tiefe von 5 bis 200 µm in zumindest einem Längenabschnitt einen um mindestens 10% gegenüber einem Kern des Schlauchstutzens 2 und/oder der Pressfassung 3 reduzierten C-Gehalt aufweist.

## Beschreibung

Die Erfindung betrifft eine Schlaucharmatur gemäß den Merkmalen des Patentanspruches 1 sowie ein Verfahren zur Herstellung einer solchen Schlaucharmatur gemäß den Merkmalen des Patentanspruches 9.

Schlaucharmaturen sind Verbindungselemente in Form von Fittingen und Fassungen, insbesondere von Schlauchfittingen und Pressfassungen. Sie werden aus rundem Vollmaterialhalbzeug hergestellt. Das Vollmaterialhalbzeug wird dabei auf Zerspanungsmaschinen mit einer Bohrung versehen und anschließend auf der Innen- und Außenseite zerspanend zu einem rohrförmigen Fertigteil verarbeitet. Die zu Schlaucharmaturen verarbeiteten Fertigteile werden in einem Folgeverarbeitungsschritt auf einer Biegemaschine häufig mit einem Rohrbogen versehen. Um die beim Biegen auftretende Kaltumformungsbelastung ohne Materialversagen zu überstehen, werden alle Fittinge vor dem Biegen wärmebehandelt. Die zu Fassungen verarbeiteten Fertigteile werden ebenfalls nach der Zerspanung wärmebehandelt, um auch einen Kaltumformungsprozess ohne Materialversagen zu überstehen. Dieser Kaltumformungsprozess findet statt beim Verpressen einer Pressfassung auf einen Schlauch und auf den innen liegenden Fitting bzw. Schlauchstutzen.

Das verwendete Vollmaterialhalbzeug ist größtenteils bleihaltig und damit umwelt- und gesundheitsschädlich in der Herstellung, Verarbeitung und Anwendung. Weiterhin wird der Stahl des Vollmaterialhalbzeugs bis auf Ausnahmen in einem herkömmlichen Verfahren erzeugt mit einer sehr hohen CO2-Emission. Ein weiterer Nachteil des aus Vollmaterial hergestellten Fertigteils ist eine für die Weiterverarbeitung notwendige Wärmebehandlung, die nach dem Zerspanen in vielen Fällen bei externen Lohnbearbeitern stattfindet. Mit der Wärmebehandlung einher gehen zusätzlich Kosten, Logistikaufwände und eine Verlängerung der Durchlaufzeit des Herstellprozesses und unter Umständen Qualitätsrisiken durch Korrosion und anderweitige Oberflächenbelege aufgrund der Temperaturbelastung. Ein weiterer Nachteil des Vollmaterialhalbzeuges ist das aufwändige Erzeugen einer Bohrung und die anschließende zerspanende Bearbeitung sämtlicher Innen- und Außenoberflächen. Hierbei wird häufig mehr als 50 % des Halbzeugs zerspant.

Der Erfindung liegt die Aufgabe zugrunde, eine Schlaucharmatur aufzuzeigen, die aus einem Halbzeug hergestellt werden kann, das sich aufgrund seiner besonderen Eigenschaften nach dem Zerspanen zum Fertigteil ohne nachträgliche Wärmebehandlung kalt umformen lässt. Weiterhin sollte das Halbzeug möglichst so konzipiert sein, dass der Zerspanungsaufwand reduziert werden kann. Darüber hinaus soll aus Umwelt- und Gesundheitsschutzaspekten möglichst ein bleifreies Halbzeugmaterial eingesetzt werden können. Vorzugsweise sollte das Halbzeugmaterial aus einem CO2-armen Stahlherstellungsprozess resultieren.

Die erfindungsgemäße Lösung besteht in der Schlaucharmatur mit einem Schlauchstutzen und einer Pressfassung zur Verbindung mit dem Schlauchstutzen. Die Pressfassung weist innenseitig einen gezahnten Verbindungsbereich und/oder der Schlauchstutzen weist außenseitig einen gezahnten Verbindungsbereich auf. Diese beiden Verbindungsbereiche dienen zur Schlauchfixierung, wenn die Pressfassung nach radial innen auf den Schlauchstutzen gepresst wird. Zusätzlich weist die Pressfassung eine ringförmige Kontaktzone aus, die dazu ausgebildet ist, mit einer Kontaktzone des Schlauchstutzens durch plastische Verformung kontaktiert zu werden. Der gegenseitige Wirkeingriff zwischen dem Schlauchstutzen und der Pressfassung erfolgt durch das Verpressen der Pressfassung nach radial innen auf den Schlauchstutzen

Erfindungsgemäß bestehen der Schlauchstutzen und/oder die Pressfassung aus einer Stahllegierung, die neben Eisen und erschmelzungsbedingten Verunreinigungen folgende Elemente in Massenprozent aufweist:
C 0,01 - 0,60; Si max. 0,60; Mn 0,20 - 3,0; S 0,06 - 0,40; Cr max. 1,8; Ca max. 0,02, Al max. 0,06; O max. 80 ppm; V max. 0,5; N max. 0,15; Pb max. 0,1; P max. 0,1; B max. 0,01; N+P max. 0,2; Bi max. 0,1; Te max. 0,07; Se max. 0,2; Ni max. 2,0; Cu max. 0,8; Nb max. 0,3; Ti max. 0,5.

Das Mikrogefüge des Schlauchstutzens bzw. der Pressfassung weist vorzugsweise ein sehr feines Gefüge auf mit einer Korngröße 8 oder feiner gemäß ASTM E112-13(2021). Die Bruchdehnung A5 beträgt mindestens 15 %.

Der Schlauchstutzen und/oder die Pressfassung werden jeweils aus einem nahtlos kaltgezogenen Rohr als Halbzeug hergestellt. Der Werkstoff weist einen Mindestschwefelgehalt auf. Das Rohrhalbzeug weist darüber hinaus eine für die Verarbeitung auf einer Zerspanungsmaschine notwendige Mindestgeradheit auf. Aufgrund einer speziellen Wärmebehandlung und einer ausgeprägten Gefügehomogenität weist das Rohrhalbzeug mit der erfindungsgemäßen Legierungszusammensetzung eine auch nach dem Zerspanen hohe Kaltumformfähigkeit auf in allen Umformrichtungen, sowohl bei einer optionalen Biegeumformung der Schlauchstutzen als auch bei der Pressumformung der Pressfassungen. Auch die Funktionsanforderungen als Bauteile an dem fertig konfigurierten Schlauch werden erfüllt. Hierbei ist insbesondere die Druckbeständigkeit der Schlaucharmatur unter statischer und zyklischer Innendruckbelastung zu nennen.

Der verwendete Werkstoff ist insbesondere bleifrei und stellt keine Gefährdung von Umwelt und Gesundheit bei der Herstellung und Verarbeitung des Rohrhalbzeugs dar. Gegenwärtige Vorgaben der EU-Gesetzgebung in dieser Hinsicht, z.B. REACh, werden eingehalten.

Der Werkstoff wird zudem nach dem Zerspanen zur Fertigkontur nicht nochmal mit einer speziellen Wärmebehandlung behandelt. Dadurch fallen deutlich geringere CO2-Emissionen in der Halbzeugherstellung an.

Ein weiterer Vorteil ist, dass Bearbeitungszeiten und damit Bearbeitungskosten durch den Entfall des Einbringens einer Bohrung eingespart werden. Eine komplette spanende Bearbeitung der Werkstückaußen- bzw. Werkstückinnenseite soll entfallen. Aus diesem Grund ist vorgesehen, dass die Pressfassung außenseitig und der Schlauchstutzen innenseitig jeweils in zumindest einem Längenabschnitt ziehglatt sind. Das bedeutet, dass die besagten Längenabschnitte durch Ziehen und nicht durch spanende Bearbeitung hergestellt worden sind. Es handelt sich daher bei dem Schlauchstutzen und bei der Pressfassung um Rohrbauteile, die durch Ziehen hergestellt sind und nicht um Bauteile, die durch Zerspanen aus dem Vollmaterial erzeugt worden sind. Ziehglatt bedeutet in diesem Zusammenhang eine Rauigkeit Ra (Mittenrauwert) von 0,1 µm bis 4 µm.

Da die Wärmebehandlung nach dem Zerspanen entfällt, wird auch die Durchlaufzeit des Gesamtherstellprozesses reduziert. Es entfallen die Wärmebehandlungskosten sowie die Wärmebehandlungslogistik. Die Qualitätsrisiken, die durch Korrosion oder Oberflächenbeläge aufgrund der Wärmebehandlung entstehen können, entfallen ebenfalls.

Das Halbzeug der Schlaucharmatur, d.h. das gezogene Rohr, weist bis zu einer Tiefe von 5 bis 200 µm, gemessen von der ziehglatten Oberfläche, in zumindest einem ziehglatten Längenabschnitt einen um mindestens 10 %, bevorzugt mind. 15% gegenüber einem Kern des Schlauchstutzens und/oder der Pressfassung reduzierten C-Gehalt auf. Die Messungen der Kohlenstoffanteile ist bevorzugt im selben Bereich des ziehglatten Längenabschnitts vorzunehmen. Es liegt gewissermaßen eine Randentkohlung über eine Tiefe von 5 bis 200 µm vor. Die Randentkohlung reduziert die Rissinduzierung an den bei einer Kaltumformung (wie Biegen des Schlauchstutzens oder Crimpen der Schlauchfassung) besonders beanspruchten Flächen des Schlauchstutzens oder der Pressfassung, da durch die Reduzierung des Kohlenstoffgehalt die Festigkeit lokal herabgesetzt und die Kaltumformbarkeit erhöht ist.

In vorteilhafter Weiterbildung der Erfindung ist der C-Gehalt in dem genannten Bereich vorzugsweise um wenigstens 15 % gegenüber einem Kern des Schlauchstutzens und/oder der Pressfassung reduziert.

Das Mikrogefüge weist eine Korngröße ermittelt nach ASTM E 112-13(2021) von 8 oder feiner, insbesondere 9 oder feiner, besonders bevorzugt 10 oder feiner bei sehr guter Homogenität und sehr guter Gleichverteilung von Ferrit und Perlit auf.

Je nach Anforderungsprofil können die unbearbeiteten Längenabschnitte des ziehglatten Ausgangsrohrs vorzugsweise eine Rauigkeit von Ra 0,1 µm bis 2 µm aufweisen.

In vorteilhafter Weiterbildung der Erfindung bestehen der Schlauchstutzen und/oder die Pressfassung aus einer Stahllegierung, die neben Eisen unter schmelzungsbedingten Verunreinigungen folgende Elemente in Massenprozent aufweist:
C 0,03 - 0,60; Si max. 0,60; Mn 0,30 - 3,0; S 0,07 - 0,40; Cr max. 1,8; Ca max. 0,02; Al max. 0,06; O max. 80 ppm; V max. 0,5; N max. 0,15; Pb max. 0,1; P max. 0,1; B max. 0,01; N+P max. 0,2; Bi max. 0,1; Te max. 0,07; Se max. 0,2; Ni max. 2,0; Cu max. 0,8; Nb max. 0,3; Ti max. 0,5;
und insbesondere

C 0,05 - 0,40; Si 0,05 - 0,60; Mn 0,50 - 2,0; S 0,07 - 0,25; Cr max. 1,8; Ca max. 0,02; Al max. 0,06; O max. 80 ppm; V max. 0,5; N max. 0,15; Pb max. 0,1; P max. 0,1; B max. 0,01; N+P max. 0,2; Bi max. 0,1; Te max. 0,07; Se max. 0,2; Ni max. 2,0; Cu max. 0,8; Nb max. 0,3; Ti max. 0,5.

Bevorzugt liegt das Masse-Verhältnis Mn zu S in einem Bereich von 2,2 bis 50, besonders bevorzugt 3,3 bis 40.

Die erfindungsgemäße Schlaucharmatur zeichnet sich insbesondere durch ein gleichförmig verteiltes Gefüge aus Perlit und Ferrit mit zeilenförmigen Mangansulfiden auf. Versuche der Materialstruktur von Materialproben eines Schlauchstutzens, der nach dem erfindungsgemäßen Verfahren hergestellt wurde im Vergleich zu einem Schlauchstuten aus Vollmaterial haben ergeben, dass auch bei dem Vollmaterial zeilenförmige Mangansulfide auftreten, die allerdings eine deutlich größere Breite haben als bei Schlauchstutzen, die aus einem kaltgezogenen nahtlosen Rohrmaterial hergestellt sind. Die Versuche haben gezeigt, dass ein Unterschied in der Breite um den Faktor 2 bis 6 besteht. Die Unterschiede hängen davon ab, ob das Vollmaterial ein Warmstab ist oder der Stab kaltgezogen wurde (z B. Blankstahl), auch beim Rohr ist die Breite der Sulfide abmessungsabhängig. Die Spanne ist dafür eher eng gefasst. Bevorzugt beträgt das Verhältnis von Länge zu Breite der zeilenförmigen Mangansulfide 15:1 bis 100:1, insbesondere 20:1 bis 90:1.

Erfindungsgemäß haben die zeilenförmigen Mangansulfide daher ein recht großes Verhältnis von Länge zu Breite, was auf eine größere Richtungsabhängigkeit bei der Fertigung durch Ziehen eines Rohrs zurückzuführen ist. Diese Richtungsabhängigkeit ist für den Anwendungsfall nicht von Nachteil, sondern ein charakteristisches nachweisbares Merkmal für die Art der Herstellung des Schlauchstutzens bzw. der Pressfassung der Schlaucharmatur im Vergleich zu Schlaucharmaturen, die aus einem Vollmaterial gefertigt wurden.

Durch die Randentkohlung im Saumbereich, d.h. durch den um mindestens 10 bzw. 15 % reduzierten C-Gehalt, verhält sich das Endprodukt weniger rissanfällig und erlaubt damit einen höheren Umformgrad durch Kaltumformen, insbesondere beim Crimpen der Pressfassungen oder Biegen des Schlauchstutzens.

Die erfindungsgemäße Schlaucharmatur, die aus kaltgezogenen Rohren hergestellt wird, hat während der Produktion den Vorteil eines geringeren Transportgewichts im Vergleich zu den Transporten eines Vollmaterials. Die Frachtkosten sind geringer, der CO2-Ausstoß wird reduziert. Das geringere Bearbeitungsgewicht ermöglicht auch einfachere Maschinenkonstruktionen. Der reduzierte Zerspanungsabfall senkt ebenfalls den CO2-Aufwand sowie die Materialkosten und dadurch den CO2-Fussabdruck insgesamt. Die Bearbeitungszeit der Zerspanung ist signifikant kürzer. Die Wärmebehandlungszeit entfällt komplett.

Das erfindungsgemäße Verfahren zur Herstellung einer Schlaucharmatur gemäß Patentanspruch 1 sieht mindestens folgende Schritte in der genannten Reihenfolge vor: das Giessen der Stahllegierung aus der besagten Zusammensetzung, das Walzen der Stahllegierung zu einem Warmrohr und das Ziehen eines nahtlosen Kaltrohrs. Das Kaltrohr wird anschließend normalisiert oder Spannungsarm-Glühen oder Weichglühen, bevor es der zerspanenden Bearbeitung zugeführt wird. Stähle, die einem Normalisierungsvorgang unterzogen wurden, weisen eine feinkörnige Struktur mit homogenen Eigenschaften und guter Bearbeitbarkeit auf. Beim Normalisieren beginnen neue Austenitkörner, die viel kleiner sind als die ursprünglichen Ferritkörner, zu wachsen. Nach der Erwärmung und einer kurzen Haltezeit erfolgt die Abkühlung an Luft oder in einem Gas. Während der Abkühlung entstehen neue Ferritkörner mit einer feineren Korngröße. Beim anschließenden Zerspanen des nahtlosen, kaltgezogenen und normalisierten Kaltrohrs wird es je nach Ausgangsdurchmesser zum Schlauchstutzen oder zur Pressfassung ausgebildet. Bei der Pressfassung werden die Innenseite und die Stirnseiten spanend bearbeitet. Bei dem Schlauchstutzen werden die Außenseite und die Stirnseite bearbeitet. Die Pressfassung kann außenseitig und der Schlauchstutzen kann innenseitig in zumindest einem Längenabschnitt ohne zerspanende Bearbeitung bleiben, d.h. eine ziehglatte Oberfläche aufweisen.

Die Erfindung zeichnet sich mithin vor allem dadurch aus, dass das Bohren des Vollmaterials zum Herstellen einer zentralen Bohrung und die Wärmebehandlung nach der Zerspanung entfällt. Der erfindungsgemäße Werkstoff eignet sich dazu, ausschließlich kaltumgeformt zu werden, beispielsweise wenn der Schlauchstutzen nach der spanenden Bearbeitung abgewinkelt werden soll bzw. wenn die Pressfassung vercrimpt werden soll.

Die erfindungsgemäße Schlaucharmatur dient dazu, mit einem Schlauch verbunden zu werden, wobei der Schlauchstutzen in den Schlauch eingeführt wird und mit der Pressfassung durch Vercrimpen auf dem Schlauchstutzen fixiert wird.

Die Erfindung betrifft unabhängig den Schlauchstutzen auch Pressfassungen für Schlauchstutzen, d.h. für Schlauchstutzen aus anderen Werkstoffen oder für Schlauchstutzen, die nach anderen Fertigungsverfahren hergestellt sind, und zu einer Schlaucharmatur miteinander kombiniert werden können. Die Pressfassung zeichnet sich dadurch aus, dass sie innenseitig einen gezahnten Verbindungsbereich zur Schlauchfixierung und eine ringförmige Kontaktzone aufweist, die dazu ausgebildet ist, mit einer Kontaktzone des Schlauchstutzens durch plastische Verformung kontaktiert zu werden, wobei die Pressfassung aus einer Stahllegierung besteht, die neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
wobei das Mikrogefüge Korngröße 8 gemäß ASTM E1 12-13(2021) oder feiner ist und die Bruchdehnung A5 min. 15% beträgt, wobei die Pressfassung in zumindest einem Längenabschnitt ziehglatt ist mit einer Rauigkeit Ra 0,1 µm bis 4 µm sowie innerhalb des ziehglatten Längenabschnitts bis zu einer Tiefe von 5 bis 200 µm einen um mindestens 10% gegenüber einem Kern der Pressfassung reduzierten C-Gehalt aufweist.

Die Erfindung betrifft auch Schlauchstutzen für Pressfassungen von Schlaucharmaturen, d.h. für Pressfassungen aus anderen Werkstoffen oder für Pressfassungen, die nach anderen Fertigungsverfahren hergestellt sind, und zu einer Schlaucharmatur miteinander kombiniert werden können. Der Schlauchstutzen zeichnet sich dadurch aus, dass er Schlauchstutzen außenseitig einen gezahnten Verbindungsbereich zur Schlauchfixierung und eine Kontaktzone für eine Pressfassung aufweist, wobei der Schlauchstutzen aus einer Stahllegierung besteht, die neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
wobei das Mikrogefüge Korngröße 8 gemäß ASTM E112-13(2021) oder feiner ist und die Bruchdehnung A5 min. 15% beträgt, wobei der Schlauchstutzen innenseitig in zumindest einem Längenabschnitt ziehglatt ist mit einer Rauigkeit Ra 0,1 µm bis 4 µm sowie innerhalb des ziehglatten Längenabschnitts bis zu einer Tiefe von 5 bis 200 µm einen um mindestens 10% gegenüber einem Kern des Schlauchstutzens reduzierten C-Gehalt aufweist.

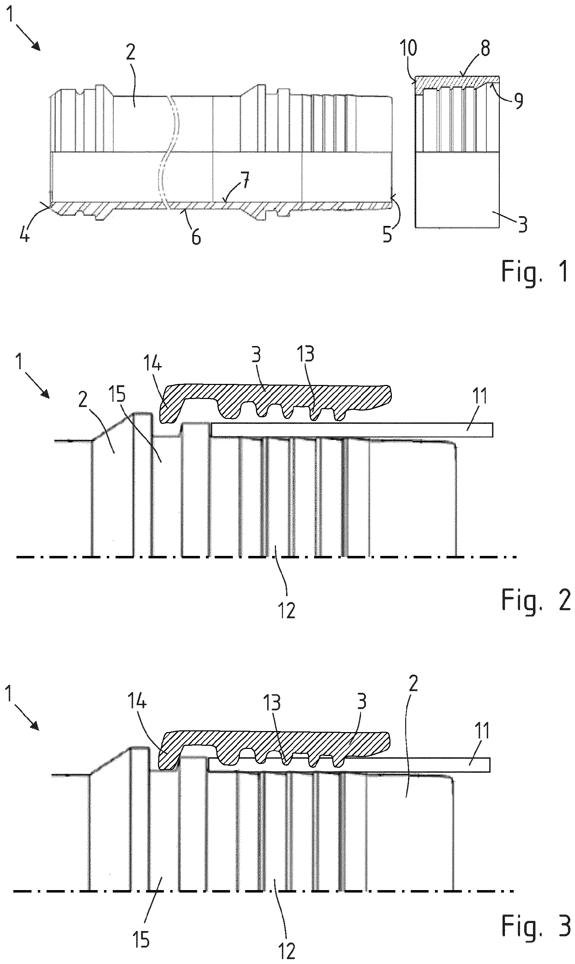

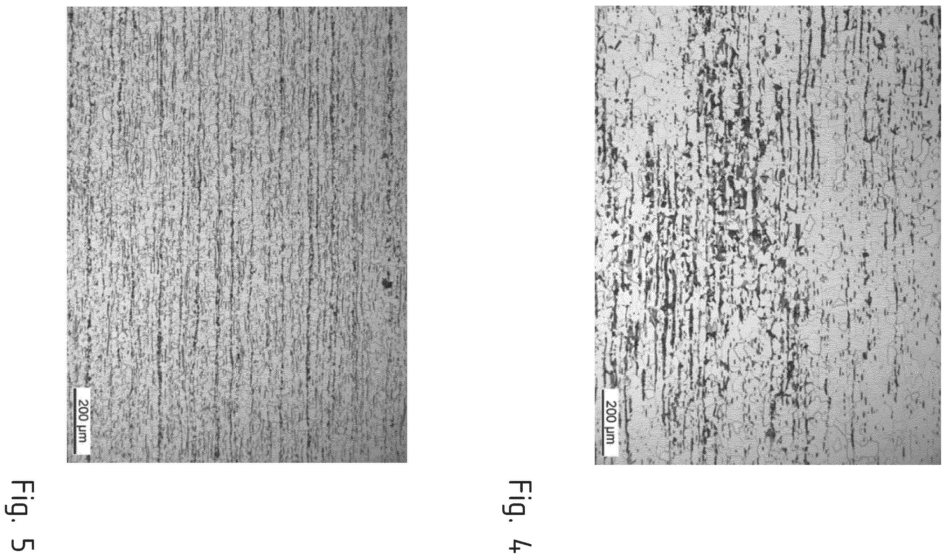

Die Erfindung wird nachfolgend anhand eines in den Figuren 1 bis 3 rein schematisch darstellten Ausführungsbeispiels erläutert. Die Figuren 4 bis 7 zeigen vergleichende Schliffbilder.

Die Figur 1 zeigt eine Schlaucharmatur 1 in Form einer Hydraulikschlaucharmatur, umfassend einen Schlauchstutzen 2 und eine dazu in Durchmesser, Länge und Formgebung passende Pressfassung 3. Der Schlauchstutzen 2 und die Pressfassung 3 sind aus einem kaltgezogenen Rohr aus Stahl hergestellt. Die spanabhebende Bearbeitung zur Herstellung der Endkontur erfolgt bei dem Schlauchstutzen nur im Bereich der Stirnseiten 4, 5 und im Bereich der Außenseite 6. Die Innenseite 7 wird nicht spanend bearbeitet. Sie ist ziehglatt.

Bei der Pressfassung 3 verhält es sich umgekehrt: Hier ist die Außenseite 8 ziehglatt, während die Innenseite 9 spanend bearbeitet worden ist. Ebenso wurden die Stirnseiten 10 spanabhebend bearbeitet.

Die Figuren 2 und 3 zeigen das Verbinden der Hydraulikarmatur 1 mit einem Schlauch 11. In der Figur 2 ist der Schlauchstutzen 2 in den Schlauch 11 und die Pressfassung 3 über den Schlauchstutzen 1 geführt. Der Schlauch 11 befindet sich in einem gezahnten Verbindungsbereich 12 außenseitig des Schlauchstutzens 2. Auch die Pressfassung weist einen gezahnten Verbindungsbereich 13 auf, der zur Schlauchfixierung dient. Die Verbindungsbereiche 12, 13 setzen jeweils mehrere umlaufende Vorsprünge bzw. Vertiefungen, um sich beim Crimpen der Pressfassung in dem Schlauch 11 zu verkrallen und den Schlauch 11 auf diese Art und Weise an der Schlaucharmatur 1 zu fixieren. Zusätzlich besitzt die Pressfassung 11 eine ringförmige Kontaktzone 14, die mit einer ebenfalls ringförmigen Kontaktzone 15 des Schlauchstutzens 2 in Eingriff gelangt. Die Figure 2 zeigt die Presshülse im unverpressten Zustand. Die Figur 3 zeigt wie die beiden Kontaktzonen 14, 15 im verpressten Zustand miteinander in Eingriff stehen und wie die beiden Verbindungsbereiche 12, 13 den Schlauch 11 halten.

Die Figuren 4 und zeigen im Vergleich das Gefüge von einem aus einem Vollmaterial hergestellten Schlauchstutzen (Figur 4) und das Gefüge von einem aus einem Rohr hergestellten Schlauchstutzen (Figur 5). In beiden Fällen ist ein Längsschliff dargestellt. Das Material ist jeweils 11SMn30. Die Homogenität des Gefüges ist in Figur 5 wesentliche größer. Die Gleichverteilung von Ferrit und Perlit ist besser. Das Gefüge ist feinkörniger bei einer Korngröße 8 oder feiner.

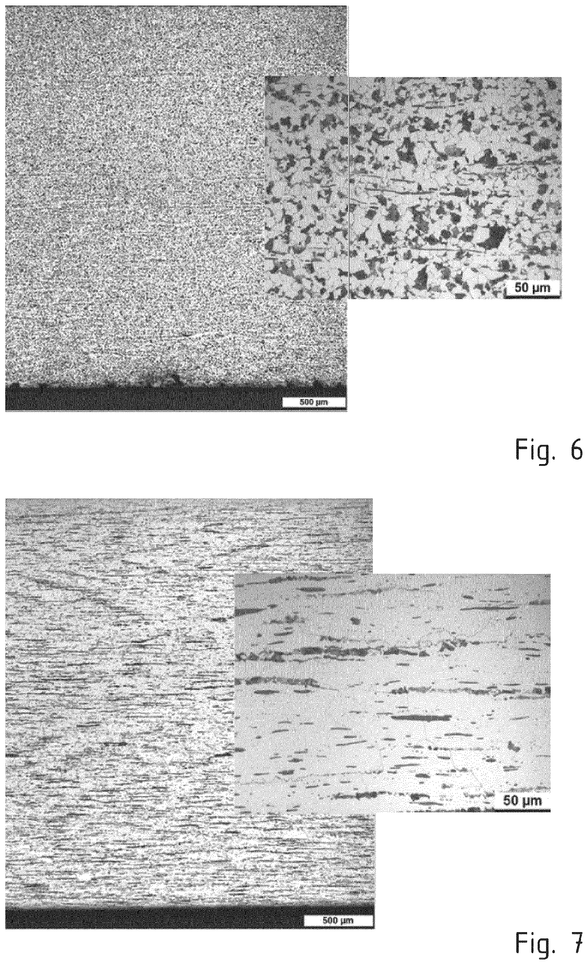

Die Figuren 6 und 7 zeigen weitere Schliffbilder jeweils in 2 unterschiedlichen Vergrößerungen. Die Figur 6 zeigt das Schliffbild durch einen zu einem Rohr umgeformten Werkstoff, aus dem eine erfindungsgemäße Schlaucharmatur hergestellt wird. Die Ferrit-Perlit-Struktur ist homogen bei einer Korngröße von 11-12. Die Figur 7 zeigt das Schliffbild durch eine aus dem gegossenen und nicht zu dem Rohr umgeformten Werkstoff, aus dem die erfindungegemäße Schlaucharmatur nicht hergestellt wird. Der Werkstoff weist eine Korngröße von 5-6 auf.

### Bezugszeichen:

- 1 -: Schlaucharmatur
- 2 -: Schlauchstutzen
- 3 -: Pressfassung
- 4 -: Stirnseite von 2
- 5 -: Stirnseite von 2
- 6 -: Außenseite von 2
- 7 -: Innenseite von 2
- 8 -: Außenseite von 3
- 9 -: Innenseite von 3
- 10 -: Stirnseite von 3
- 11 -: Schlauch
- 12 -: Verbindungsbereich von 2
- 13 -: Verbindungsbereich von 3
- 14 -: Kontaktzone von 3
- 15 -: Kontaktzone von 2

## Patentansprüche

1. Schlaucharmatur (1) mit einem Schlauchstutzen (2) und einer Pressfassung (3) zur Verbindung mit dem Schlauchstutzen (2), wobei die Pressfassung (3) innenseitig und der Schlauchstutzen (2) außenseitig jeweils einen gezahnten Verbindungsbereich (12, 13) zur Schlauchfixierung haben und wobei die Pressfassung (3) eine ringförmige Kontaktzone (14) aufweist, die dazu ausgebildet ist, mit einer Kontaktzone (15) des Schlauchstutzens (2) durch plastische Verformung kontaktiert zu werden, wobei der Schlauchstutzen (2) und/ oder die Pressfassung (3) aus einer Stahllegierung bestehen, die neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
wobei das Mikrogefüge Korngröße 8 gemäß ASTM E112-13(2021) oder feiner ist und die Bruchdehnung A5 min. 15% beträgt, wobei die Pressfassung (3) außenseitig und/oder der Schlauchstutzen (2) innenseitig in zumindest einem Längenabschnitt ziehglatt sind mit einer Rauigkeit Ra 0,1 µm bis 4 µm sowie innerhalb der ziehglatten Längenabschnitte bis zu einer Tiefe von 5 bis 200 µm einen um mindestens 10% gegenüber einem Kern des Schlauchstutzens (2) und/oder der Pressfassung (3) reduzierten C-Gehalt aufweist.

2. Schlaucharmatur (1) nach Anspruch 1, **dadurch gekennzeichnet, dass** die Pressfassung (3) und/oder der Schlauchstutzen (2) innerhalb der ziehglatten Längenabschnitte bis zu einer Tiefe von 5 bis 200 µm einen um mindestens 15 % gegenüber einem Kern des Schlauchstutzens (2) und/oder der Pressfassung (3) reduzierten C-Gehalt aufweisen.

3. Schlaucharmatur (1) nach Anspruch 1 oder 2, **dadurch gekennzeichnet, dass** das Mikrogefüge Korngröße 9 oder 10, gemäß ASTM E112-13(2021) oder feiner ist.

4. Schlaucharmatur (1) nach einem der Ansprüche 1 bis 3, **dadurch gekennzeichnet, dass** die Pressfassung (3) außenseitig und/oder der Schlauchstutzen (2) innenseitig in dem zumindest einen Längenabschnitt ziehglatt ist/sind mit einer Rauigkeit Ra 0,1 µm bis 2 µm.

5. Schlaucharmatur (1) nach einem der Ansprüche 1 bis 4, **dadurch gekennzeichnet, dass** der Schlauchstutzen (2) und/oder die Pressfassung (2) aus einer Stahllegierung bestehen, die neben Eisen und erschmelzungsbedingten Verunreinigungen folgende Elemente in Masseprozent aufweist:
C 0,03 - 0,60; Si max. 0,60; Mn 0,30 - 3,0; S 0,07 - 0,40; Cr max. 1,8; Ca max. 0,02; Al max. 0,06; O max. 80 ppm; V max. 0,5; N max. 0,15; Pb max. 0,1; P max. 0,1; B max. 0,01; N+P max. 0,2; Bi max. 0,1; Te max. 0,07; Se max. 0,2; Ni max. 2,0; Cu max. 0,8; Nb max. 0,3; Ti max. 0,5.

6. Schlaucharmatur (1) nach einem der Ansprüche 1 bis 5, **dadurch gekennzeichnet, dass** der Schlauchstutzen (2) und/oder die Pressfassung (3) aus einer Stahllegierung bestehen, die neben Eisen und erschmelzungsbedingten Verunreinigungen folgende Elemente in Masseprozent aufweist:
C 0,05 - 0,40; Si 0,05 - 0,60; Mn 0,50 - 2,0; S 0,07 - 0,25; Cr max. 1,8; Ca max. 0,02; Al max. 0,06; O max. 80 ppm; V max. 0,5; N max. 0,15; Pb max. 0,1; P max. 0,1; B max. 0,01; N+P max. 0,2; Bi max. 0,1; Te max. 0,07; Se max. 0,2; Ni max. 2,0; Cu max. 0,8; Nb max. 0,3; Ti max. 0,5.

7. Schlaucharmatur (1) nach einem der Ansprüche 1 bis 6, **dadurch gekennzeichnet, dass** das Masseverhältnis Mn zu S in einem Bereich von 2,2 bis 50, bevorzugt 3,3 bis 40, liegt.

8. Schlaucharmatur (1) nach einem der Ansprüche 1 bis 7, **dadurch gekennzeichnet, dass** das der Schlauchstutzen (2) und/oder die Pressfassung (3) ein gleichförmig verteiltes Gefüge aus Perlit und Ferrit mit zeilenförmigen Mangansulfiden aufweisen, wobei das Verhältnis von Länge zu Breite der zeilenförmigen Mangansulfide 15:1 bis 100:1; insbesondere 20:1 bis 90:1 beträgt.

9. Schlaucharmatur (1) nach einem der Ansprüche 1 bis 8, **dadurch gekennzeichnet, dass** die Schlaucharmatur eine Hydraulikschlaucharmatur ist.

10. Verfahren zur Herstellung einer Schlaucharmatur (1) nach einem der Ansprüche 1 bis 9, mit folgenden Schritten: a) Stahllegierung gießen, b) Warmrohr walzen, c) Kaltrohr ziehen, d) Kaltrohr normalisieren, Spannungsarm-Glühen oder Weichglühen e) Zerspanen zum Schlauchstutzen oder zur Pressfassung, wobei ein äußerer Längenabschnitt der Pressfassung und/oder ein innerer Längenabschnitt des Schlauchstutzens ohne Bearbeitung bleiben e) optional Kaltumformung des Schlauchstutzens durch Biegen.

11. Pressfassung (3), insbesondere für eine Schlaucharmatur (1) nach einem der Ansprüche 1 bis 9, wobei die Pressfassung (3) innenseitig einen gezahnten Verbindungsbereich (13) zur Schlauchfixierung und eine ringförmige Kontaktzone (14) aufweist, die dazu ausgebildet ist, mit einer Kontaktzone (15) des Schlauchstutzens (2) durch plastische Verformung kontaktiert zu werden, wobei die Pressfassung (3) aus einer Stahllegierung besteht, die neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
wobei das Mikrogefüge Korngröße 8 gemäß ASTM E112-13(2021) oder feiner ist und die Bruchdehnung A5 min. 15% beträgt, wobei die Pressfassung (3) in zumindest einem Längenabschnitt ziehglatt ist mit einer Rauigkeit Ra 0,1 µm bis 4 µm sowie innerhalb des ziehglatten Längenabschnitta bis zu einer Tiefe von 5 bis 200 µm einen um mindestens 10% gegenüber einem Kern der Pressfassung (3) reduzierten C-Gehalt aufweist.

12. Schlauchstutzen (2), insbesondere für eine Schlaucharmatur (1) nach einem der Merkmale 1 bis 9, wobei der Schlauchstutzen (2) außenseitig jeweils einen gezahnten Verbindungsbereich (12) zur Schlauchfixierung und eine Kontaktzone (15) für eine Pressfassung (3) aufweist, wobei der Schlauchstutzen (2) aus einer Stahllegierung besteht, die neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
wobei das Mikrogefüge Korngröße 8 gemäß ASTM E112-13(2021) oder feiner ist und die Bruchdehnung A5 min. 15% beträgt, wobei der Schlauchstutzen (2) innenseitig in zumindest einem Längenabschnitt ziehglatt ist mit einer Rauigkeit Ra 0,1 µm bis 4 µm sowie innerhalb des ziehglatten Längenabschnitts bis zu einer Tiefe von 5 bis 200 µm einen um mindestens 10% gegenüber einem Kern des Schlauchstutzens (2) reduzierten C-Gehalt aufweist.

## Geänderte Patentansprüche

### Geänderte Patentansprüche gemäss Regel 137(2) EPÜ.

1. Schlaucharmatur (1) mit einem Schlauchstutzen (2) und einer Pressfassung (3) zur Verbindung mit dem Schlauchstutzen (2), wobei die Pressfassung (3) innenseitig und der Schlauchstutzen (2) außenseitig jeweils einen gezahnten Verbindungsbereich (12, 13) zur Schlauchfixierung haben und wobei die Pressfassung (3) eine ringförmige Kontaktzone (14) aufweist, die dazu ausgebildet ist, mit einer Kontaktzone (15) des Schlauchstutzens (2) durch plastische Verformung kontaktiert zu werden, wobei der Schlauchstutzen (2) und/ oder die Pressfassung (3) aus einer Stahllegierung bestehen, die neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
wobei das Mikrogefüge Korngröße 8 gemäß ASTM E112-13(2021) oder feiner ist und die Bruchdehnung A5 min. 15% beträgt, wobei die Pressfassung (3) außenseitig und/oder der Schlauchstutzen (2) innenseitig in zumindest einem Längenabschnitt ziehglatt sind mit einer Rauigkeit Ra 0,1 µm bis 4 µm sowie innerhalb der ziehglatten Längenabschnitte bis zu einer Tiefe von 5 bis 200 µm einen um mindestens 10% gegenüber einem Kern des Schlauchstutzens (2) und/oder der Pressfassung (3) reduzierten C-Gehalt aufweist.

2. Schlaucharmatur (1) nach Anspruch 1, **dadurch gekennzeichnet, dass** die Pressfassung (3) und/oder der Schlauchstutzen (2) innerhalb der ziehglatten Längenabschnitte bis zu einer Tiefe von 5 bis 200 µm einen um mindestens 15 % gegenüber einem Kern des Schlauchstutzens (2) und/oder der Pressfassung (3) reduzierten C-Gehalt aufweisen.

3. Schlaucharmatur (1) nach Anspruch 1 oder 2, **dadurch gekennzeichnet, dass** das Mikrogefüge Korngröße 9 oder 10, gemäß ASTM E112-13(2021) oder feiner ist.

4. Schlaucharmatur (1) nach einem der Ansprüche 1 bis 3, **dadurch gekennzeichnet, dass** die Pressfassung (3) außenseitig und/oder der Schlauchstutzen (2) innenseitig in dem zumindest einen Längenabschnitt ziehglatt ist/sind mit einer Rauigkeit Ra 0,1 µm bis 2 µm.

5. Schlaucharmatur (1) nach einem der Ansprüche 1 bis 4, **dadurch gekennzeichnet, dass** der Schlauchstutzen (2) und/oder die Pressfassung (2) aus einer Stahllegierung bestehen, die neben Eisen und erschmelzungsbedingten Verunreinigungen folgende Elemente in Masseprozent aufweist:
C 0,03 - 0,60; Si max. 0,60; Mn 0,30 - 3,0; S 0,07 - 0,40; Cr max. 1,8; Ca max. 0,02; Al max. 0,06; O max. 80 ppm; V max. 0,5; N max. 0,15; Pb max. 0,1; P max. 0,1; B max. 0,01; N+P max. 0,2; Bi max. 0,1; Te max. 0,07; Se max. 0,2; Ni max. 2,0; Cu max. 0,8; Nb max. 0,3; Ti max. 0,5.

6. Schlaucharmatur (1) nach einem der Ansprüche 1 bis 5, **dadurch gekennzeichnet, dass** der Schlauchstutzen (2) und/oder die Pressfassung (3) aus einer Stahllegierung bestehen, die neben Eisen und erschmelzungsbedingten Verunreinigungen folgende Elemente in Masseprozent aufweist:
C 0,05 - 0,40; Si 0,05 - 0,60; Mn 0,50 - 2,0; S 0,07 - 0,25; Cr max. 1,8; Ca max. 0,02; Al max. 0,06; O max. 80 ppm; V max. 0,5; N max. 0,15; Pb max. 0,1; P max. 0,1; B max. 0,01; N+P max. 0,2; Bi max. 0,1; Te max. 0,07; Se max. 0,2; Ni max. 2,0; Cu max. 0,8; Nb max. 0,3; Ti max. 0,5.

7. Schlaucharmatur (1) nach einem der Ansprüche 1 bis 6, **dadurch gekennzeichnet, dass** das Masseverhältnis Mn zu S in einem Bereich von 2,2 bis 50, bevorzugt 3,3 bis 40, liegt.

8. Schlaucharmatur (1) nach einem der Ansprüche 1 bis 7, **dadurch gekennzeichnet, dass** das der Schlauchstutzen (2) und/oder die Pressfassung (3) ein gleichförmig verteiltes Gefüge aus Perlit und Ferrit mit zeilenförmigen Mangansulfiden aufweisen, wobei das Verhältnis von Länge zu Breite der zeilenförmigen Mangansulfide 15:1 bis 100:1; insbesondere 20:1 bis 90:1 beträgt.

9. Schlaucharmatur (1) nach einem der Ansprüche 1 bis 8, **dadurch gekennzeichnet, dass** die Schlaucharmatur eine Hydraulikschlaucharmatur ist.

10. Verfahren zur Herstellung einer Schlaucharmatur (1) nach einem der Ansprüche 1 bis 9, mit folgenden Schritten: a) Stahllegierung gießen, wobei die Stahllegierung neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
b) Warmrohr walzen, c) Kaltrohr ziehen, d) Kaltrohr normalisieren, Spannungsarm-Glühen oder Weichglühen e) Zerspanen zum Schlauchstutzen oder zur Pressfassung, wobei ein äußerer Längenabschnitt der Pressfassung und/oder ein innerer Längenabschnitt des Schlauchstutzens ohne Bearbeitung bleiben e) optional Kaltumformung des Schlauchstutzens durch Biegen.

11. Pressfassung (3) für eine Schlaucharmatur (1) nach einem der Ansprüche 1 bis 9, wobei die Pressfassung (3) innenseitig einen gezahnten Verbindungsbereich (13) zur Schlauchfixierung und eine ringförmige Kontaktzone (14) aufweist, die dazu ausgebildet ist, mit einer Kontaktzone (15) des Schlauchstutzens (2) durch plastische Verformung kontaktiert zu werden, wobei die Pressfassung (3) aus einer Stahllegierung besteht, die neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
wobei das Mikrogefüge Korngröße 8 gemäß ASTM E112-13(2021) oder feiner ist und die Bruchdehnung A5 min. 15% beträgt, wobei die Pressfassung (3) in zumindest einem Längenabschnitt ziehglatt ist mit einer Rauigkeit Ra 0,1 µm bis 4 µm sowie innerhalb des ziehglatten Längenabschnitta bis zu einer Tiefe von 5 bis 200 µm einen um mindestens 10% gegenüber einem Kern der Pressfassung (3) reduzierten C-Gehalt aufweist.

12. Schlauchstutzen (2) für eine Schlaucharmatur (1) nach einem der Merkmale 1 bis 9, wobei der Schlauchstutzen (2) außenseitig jeweils einen gezahnten Verbindungsbereich (12) zur Schlauchfixierung und eine Kontaktzone (15) für eine Pressfassung (3) aufweist, wobei der Schlauchstutzen (2) aus einer Stahllegierung besteht, die neben Eisen und erschmelzungsbedingten Verunreinigungen folgende Elemente in Masseprozent aufweist:
C 0,01 - 0,60; Si max. 0,60; Mn 0,20 - 3,0; S 0,06 - 0,40; Cr max 1,8; Ca max. 0,02; Al max. 0,06; O max. 80 ppm; V max. 0,5; N max. 0,15, Pb max. 0,1; P max. 0,1, B max. 0,01; N+P max. 0,2; Bi max. 0,1; Te max. 0,07; Se max. 0,2; Ni max. 2,0; Cu max. 0,8; Nb max. 0,3; Ti max. 0,5,
wobei das Mikrogefüge Korngröße 8 gemäß ASTM E112-13(2021) oder feiner ist und die Bruchdehnung A5 min. 15% beträgt, wobei der Schlauchstutzen (2) innenseitig in zumindest einem Längenabschnitt ziehglatt ist mit einer Rauigkeit Ra 0,1 µm bis 4 µm sowie innerhalb des ziehglatten Längenabschnitts bis zu einer Tiefe von 5 bis 200 µm einen um mindestens 10% gegenüber einem Kern des Schlauchstutzens (2) reduzierten C-Gehalt aufweist.
